# EUROPÄISCHE PATENTSCHRIFT

(11) **EP 2 918 866 B1**
(45) Veröffentlichungstag und Bekanntmachung des Hinweises auf die Patenterteilung: **10.04.2019**
(21) Anmeldenummer: 15000365.5
(22) Anmeldetag: 07.02.2015
(51) Int. Cl.: F16D 69/02, C04B 35/573, F16D 65/12, F16D 65/847, F16D 65/02

(54) **Keramikbremsscheibe**
Ceramic brake disc
Disque de frein en céramique

(30) Priorität: 15.03.2014 DE 102014003782
(43) Veröffentlichungstag der Anmeldung: 16.09.2015
(73) Patentinhaber: AUDI AG, 85045 Ingolstadt (DE)
(72) Erfinder: Rosenlöcher, Jens, 90491 Nürnberg (DE)
(74) Vertreter: Reichert, Thomas Klaus

(56) Entgegenhaltungen:
- EP-A2- 1 864 958
- DE-A1-102006 057 939
- US-A- 4 766 013

## Beschreibung

Die Erfindung betrifft ein Verfahren zur Herstellung einer Keramikbremsscheibe für eine Scheibenbremse eines Kraftfahrzeugs nach dem Oberbegriff des Patentanspruches 1.

Keramikbremsscheiben können in einer Verbundbauweise aus einem formgebenden Tragkörper und aus, am Tragkörper angebundenen Reibscheiben ausgeführt sein. Das Keramikmaterial der Reibscheiben ist in diesem Fall auf eine hohe Verschleißfestigkeit ausgelegt. Das Keramikmaterial des Tragkörpers ist dagegen auf eine erhöhte Bauteilsteifigkeit ausgelegt.

Aus der EP 1 864 958 A2 ist ein gattungsgemäßes Verfahren zur Herstellung einer solchen in Verbundbauweise ausgeführten Keramikbremsscheibe bekannt. Demzufolge wird in einem Formgebungsschritt zunächst aus einem Ausgangsmaterial der faserverstärkten Verbundkeramik in einem Presswerkzeug ein Vorformling geformt und bei zum Beispiel 180°C ausgehärtet, um den Vorformling zu stabilisieren. Anschließend erfolgt ein Karbonisierungsschritt, bei dem der Vorformling unter Wärmebeaufschlagung, zum Beispiel bei einer Prozesstemperatur von 900°C, karbonisiert wird. Danach wird der karbonisierte Vorformling als ein Tragkörper in einem Verbundschritt mit den aus einem Keramikmaterial gefertigten Reibscheiben zu einer Verbundscheibe zusammengefügt. Beispielhaft können hierzu die beiden Reibscheiben mittels eines Phenolharzklebers auf dem Tragkörper fixiert werden. Durch Härten in einer Presse bei zum Beispiel 140°C und einem Pressendruck von zum Beispiel 100 MPa kann dann die Verbundscheibe gebildet werden.

Die Verbundscheibe wird anschließend einem Silizierschritt unterworfen, bei dem die Porenstruktur der Verbundscheibe unter hoher Prozesstemperatur mit geschmolzenem Silizium infiltriert wird. Dabei reagiert das flüssige Silizium mit dem in der Verbundscheibe enthaltenen Kohlenstoff zu Siliziumkarbid. Das während des Silizierschrittes aus den Kapillaröffnungen der Verbundscheibe austretende Silizium bzw. das auf der Verbundscheiben-Oberfläche verbleibende Silizium bildet dabei eine feste Siliziumschicht, die in einem anschließenden Schleifschritt entfernt wird. In dem Schleifschritt werden die Reibflächen der Reibscheiben auf ein Endmaß geschliffen.

Der oben erwähnte Silizierschritt erfolgt bei einer Prozesstemperatur oberhalb der Schmelztemperatur von Silizium, die bei etwa 1420°C liegt. Da die Reibscheiben und der Tragkörper aus unterschiedlichen Materialzusammensetzungen gefertigt sind, ergeben sich unterschiedliche thermische Ausdehnungskoeffizienten. Dies führt beim Abkühlen nach dem Silizierschritt zu mechanischen Spannungen in den Reibschichten, die zu einer Rissstruktur führen können. Die Rissstruktur wird durch das Schleifen der Reibscheiben bis auf das Endmaß freigelegt. Somit kann im Betrieb gegebenenfalls Wasser in die Rissstruktur eindringen. Durch die Anwesenheit von Wasser kann gegebenenfalls bei einer Nassbremsung das Nassansprechverhalten sowie der Aufbau eines stabilen Reibwertes im Bremssystem beeinflusst werden. Zudem kann die Rissstruktur in den Reibscheiben zu einem erhöhten Bremsbelagverschleiß sowie zu Geräuschproblemen während des Bremsvorganges führen.

Aus der US 4 766 013 A ist ein Verfahren zur Herstellung einer Keramikbremsscheibe bekannt, wobei ein karbonisierter Vorformling mit Silizium infiltriert wird und anschließend ein Schleifschritt erfolgt.

Die Aufgabe der Erfindung besteht darin, eine Keramikbremsscheibe mit erhöhter Betriebszuverlässigkeit bereitzustellen.

Die Aufgabe ist durch die Merkmale des Patentanspruches 1 gelöst. Bevorzugte Weiterbildungen der Erfindung sind in den abhängigen Ansprüchen offenbart.

Gemäß dem Patentanspruch 1 wird die oben aus dem Stand der Technik bekannte Prozessfolge zur Herstellung einer Verbundscheibe mit einem zusätzlichen Nachbearbeitungsschritt erweitert, bei dem die in der Reibfläche der Reibschichten freigelegte, offene Rissstruktur mit einem Füllmaterial verschlossen wird. Auf diese Weise wird eine Wassereinlagerung in der Rissstruktur verhindert, die gegebenenfalls das Nassansprechverhalten sowie den Aufbau eines stabilen Reibwertes beeinflussen kann. Zudem kann auch die Geräuschentwicklung während des Bremsvorgangs deutlich optimiert werden und der Bremsbelagverschleiß der Verbundscheibe vermindert werden.

Das die Rissstruktur auffüllende Füllmaterial ist Silizium oder eine Legierung daraus. Nachfolgend wird sich meist nur auf Silizium als das Füllmaterial bezogen. Anstelle von Silizium kann jedoch ohne weiteres auch eine Siliziumlegierung verwendet werden.

Das Siliziumwird durch eine Nachsilizierung auf die Reibfläche der Reibscheiben aufgebracht, bei der unter hoher Wärmebeaufschlagung eine Siliziumschmelze in die offene Rissstruktur infiltriert wird. Durch eine solche Nachsilizierung wird die offene Rissstruktur auf den Reibflächen der Reibscheiben verschlossen und zugleich auch die noch im Materialgefüge der Verbundscheibe vorhandene Restporosität aufgefüllt. Die Restporosität liegt nach dem erstmaligen Silizierschritt im Materialgefüge der Verbundscheibe noch bei zirka 5 Vol. %. Zusätzlich kann durch Auffüllen der Restporosität die Verbundfestigkeit zwischen den Reibschichten und dem Tragkörper weiter erhöht werden.

Gemäß einer bevorzugten Ausführungsform sind die Prozessbedingungen sowie die Prozessumgebung im Silizierschritt identisch mit den Prozessparametern in der Nachsilizierung. Aufgrund gleicher Prozessparameter oder - bedingungen kann fertigungstechnisch einfach der Silizierschritt und die Nachsilizierung fertigungstechnisch günstig in einer gleichen Silizieranlage erfolgen.

Im Silizierschritt und auch in der Nachsilizierung wird die Verbundscheibe beispielhaft in einen Graphittiegel auf poröse Kohlenstoff-Dochte aufgelegt und wird der Tiegel mit Silizium-Granulat befüllt und in einem Vakuumofen unter reduziertem Druck auf eine Temperatur oberhalb der Silizium-Schmelztemperatur erhitzt. Auf diese Weise kann die Siliziumschmelze in die offene Porenstruktur der Verbundscheibe und die in der Nachsilizierung in die Rissstruktur der Reibflächen infiltrieren. Anschließend erfolgt eine Abkühlung der silizierten Verbundscheibe.

In dem oben dargelegten Silizierschritt wird die Verbundscheibe von oben auf die Kohlenstoff-Dochte aufgelegt und das Silizium-Granulat unterhalb der Verbundscheibe in den Graphittiegel geschüttet, so dass die Siliziumschmelze über Kapillarwirkung durch die porösen Kohlenstoff-Dochte zur Verbundscheibe geleitet wird. In einer alternativen Prozessführung kann ein Teil des Silizium-Granulats zusätzlich auch oben auf die obere Reibschicht der Verbundscheibe aufgeschüttet werden.

Erfindungsgemäß wird der Sachverhalt genutzt, dass es lediglich beim erstmaligen Silizierschritt aufgrund der unterschiedlichen Ausdehnungskoeffizienten zwischen dem Tragkörper und der Reibscheiben zu mechanischen Spannungen kommt, die zur Rissstruktur in den Reibscheiben führen. Bei dem zeitlich nachgelagerten Nachsilizierschritt liegen die Reibscheiben sowie der Tragkörper bereits in einem umgewandelten Materialgefüge vor. Vor diesem Hintergrund ergeben sich beim, an die Nachsilizierung anschließenden Abkühlvorgang keine größeren mechanischen Spannungen, die zu einer erneuten Rissstruktur führen könnten.

Im Stand der Technik bildet sich nach dem erstmaligen Silizierschritt eine Siliziumschicht auf der Reibfläche der Reibscheiben. Im anschließenden Schleifschritt wird die Siliziumschicht unter Freilegung der offenen Rissstrukturen von den Reibscheiben entfernt und die Reibscheiben auf ein Endmaß zugeschliffen. Im erfindungsgemäßen Verfahren erfolgt nach dem erstmaligen Silizierschritt ebenfalls ein Schleifschritt. Bei diesem Schleifschritt müssen die Reibscheiben noch nicht auf ein Endmaß geschliffen werden. Vielmehr hat der erste Schleifschritt lediglich die Funktion, die Rissstruktur in den Reibscheiben freizugelegen, damit in der nachfolgenden Nachsilizierung die Siliziumschmelze in die Verbundscheibe infiltrieren kann.

Im Anschluss an die Nachsilizierung erfolgt ein zweiter Schleifschritt, bei dem die Reibflächen dann mit hoher Genauigkeit auf ein Endmaß geschliffen werden können.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Darstellung eine Scheibenbremse für ein Kraftfahrzeug mit teilweisem Aufriss;
- Fig. 2: eine stark vergrößerte schematische Teilschnittansicht der Bremsscheibe entlang einer Schnittebene I-I aus der Fig. 1;
- Fig. 3 bis 8: jeweils Ansichten entsprechend der Fig. 2, die Verfahrensschritte zur Herstellung der Keramikbremsscheibe veranschaulichen.

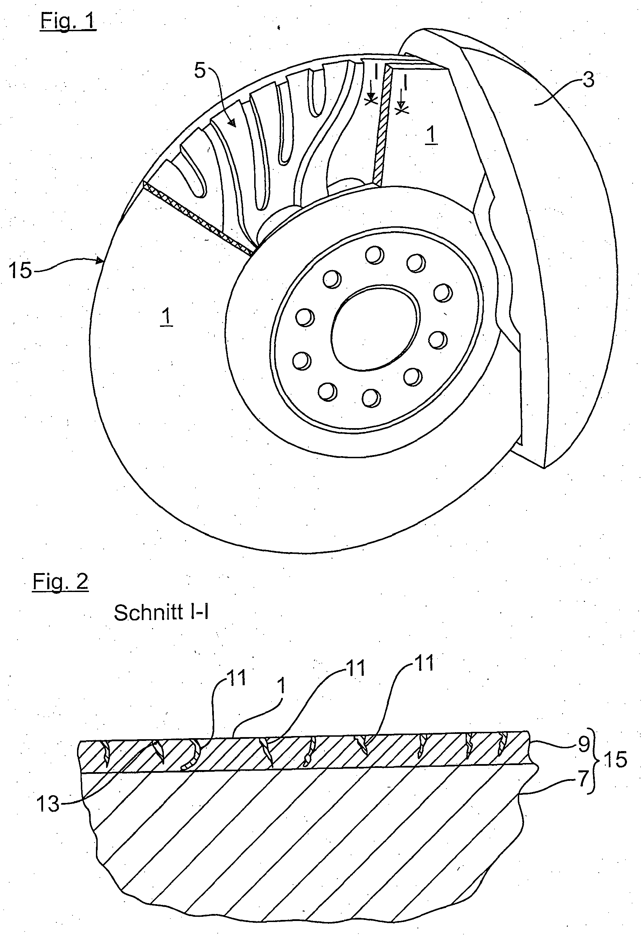

In der Fig. 1 ist eine Keramikbremsscheibe dargestellt, die in üblicher Weise mit einer Fahrzeugnabe verschraubbar ist. Deren Reibflächen 1 wirken mit gegenüberliegenden Bremsbelägen eines Bremssattels 3 zusammen. Zudem weist die Keramikbremsscheibe ein an sich bekanntes Innenbelüftungssystem 5 auf.

Die in der Fig. 1 gezeigte Keramikbremsscheibe ist in einer Verbundbauweise aufgebaut, und zwar gemäß der Fig. 2 mit einem Tragkörper 7 sowie darauf aufgebrachten Reibscheiben 9, die die Reibflächen 1 definieren. In der Fig. 2 ist stark schematisiert sowie stark vergrößert ein Schliffbild der Keramikbremsscheibe angedeutet. Demzufolge ist auf dem Tragkörper 7 die Reibscheibe 9 fest angebunden. In der Reibscheibe 9 ist eine nach außen offene Rissstruktur 11 erkennbar, die in der Fig. 2 im Hinblick auf ein einfacheres Verständnis der Erfindung übertrieben dargestellt ist. Die Rissstruktur 11 ist durch ein Siliziummaterial 13 aufgefüllt und somit vollflächig geschlossen. Dadurch ergibt sich eine glatte Reibfläche 1, die beim Bremsvorgang ein im Vergleich zum Stand der Technik verbessertes Nassansprechverhalten sowie einen günstigen Aufbau eines stabilen Reibwertes gewährleisten kann.

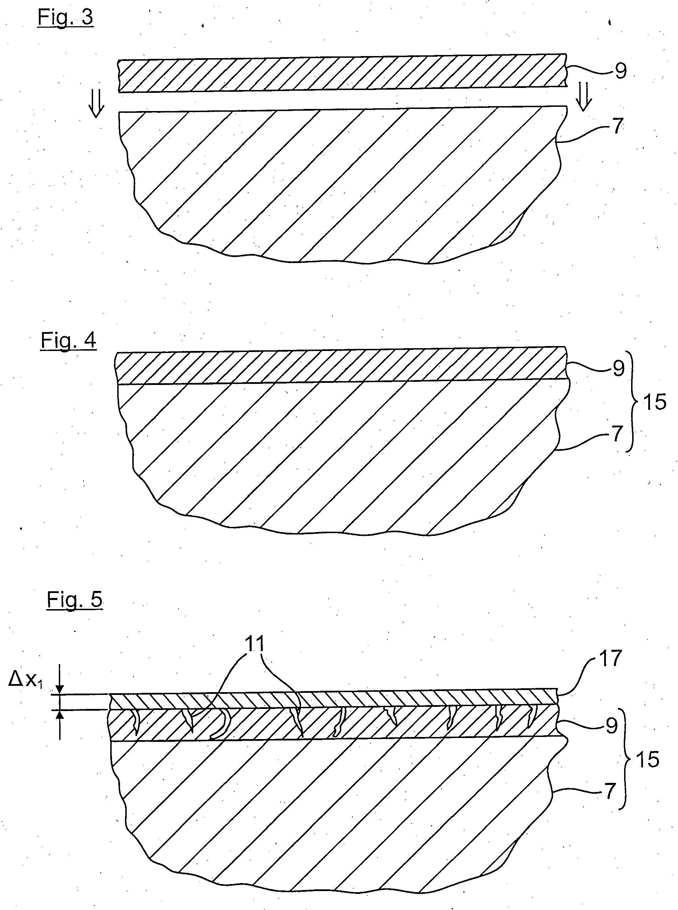

Nachfolgend wird anhand der Fig. 3 bis 8 das Verfahren zur Herstellung der in den Fig. 1 und 2 gezeigten Keramikbremsscheibe beschrieben. Demzufolge werden zunächst der Tragkörper 7 und die Reibscheiben 9 als separate Bauteile bereitgestellt. Der Tragkörper 7 besteht aus einer faserverstärkten Verbundkeramik. Dessen Ausgangsmaterial wird in einem Presswerkzeug zu einem Vorformling geformt und bei zum Beispiel 180°C ausgehärtet. Der so gebildete Vorformling wird anschließend bei 900°C karbonisiert und ist bereits annähernd auf die Endabmessungen des Endproduktes bearbeitet. Zudem ist auch das Innenbelüftungssystem 5 bereits in den Vorformling eingearbeitet.

Anschließend werden in einem Verbundschritt die Reibscheiben 9 zum Beispiel mittels eines Phenolharzklebers auf dem Tragkörper 7 fixiert und unter Druck und Wärme miteinander verbunden, wie es in der Fig. 4 dargestellt ist. Die so gebildete Verbundscheibe 15 wird einem Silizierschritt unterworfen, bei dem die Porenstruktur der Verbundscheibe 15 unter sehr hohen Prozesstemperaturen über der Schmelztemperatur von Silizium (1420°C) mit einer Siliziumschmelze infiltriert wird. Dabei reagiert die Siliziumschmelze mit dem in der Verbundscheibe 15 enthaltenen Kohlenstoff zu Siliziumkarbid. Das während des Silizierschrittes aus den Kapillaröffnungen der Verbundscheibe 15 austretende Silizium bzw. das auf der Reibfläche 1 verbleibende Silizium bildet beim Abkühlvorgang eine feste Siliziumschicht 17 (Fig. 5), die die Reibflächen 1 der Reibscheiben 9 vollständig überzieht.

Im weiteren Verlauf des Abkühlvorgangs entsteht zudem die Rissstruktur 11. Diese ergibt sich aufgrund unterschiedlicher Ausdehnungskoeffizienten in den Reibscheiben 9 und in dem Tragkörper 7. Die Rissstruktur 11 bildet sich speziell in der Reibscheibe 9 in Form von kleinen Hohlräumen oder Kapillaren.

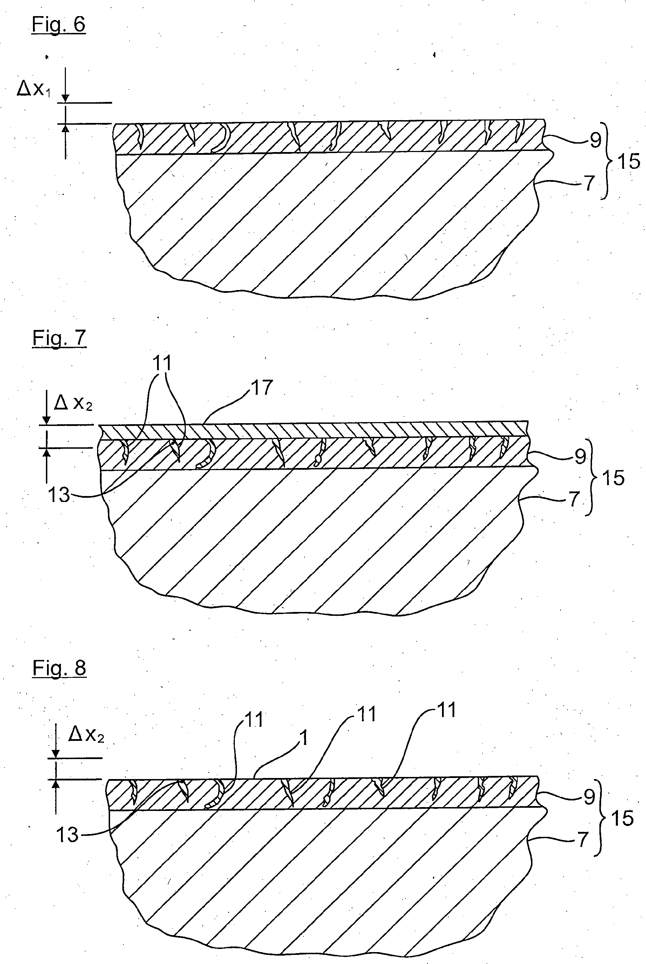

Anschließend erfolgt gemäß der Fig. 5 oder 6 ein erster Schleifschritt, und zwar mit einem Materialabtrag Δx₁, bei dem die Siliziumschicht 17 unter Freilegung der Rissstruktur 11 entfernt wird. Der hier erforderliche Materialabtrag Δx₁ ist dabei so gewählt, dass die Rissstruktur 11 freigelegt wird, das heißt die Siliziumschicht 17 vollständig entfernt wird, ohne jedoch die Reibscheiben 9 bis auf ein Endmaß zu schleifen. Anschließend wird gemäß der Fig. 7 ein Nachbearbeitungsschritt mit einer Nachsilizierung durchgeführt. Bei der Nachsilizierung wird - analog zum Silizierschritt - die Verbundscheibe 15 ebenfalls wieder mit schmelzflüssigem Silizium bei einer Temperatur über dem Silizium-Schmelzpunkt infiltriert. Dadurch wird die offene Rissstruktur 11 in den Reibschichten 9 mit dem Siliziummaterial 13 gefüllt. Gleichzeitig wird mittels der Nachsilizierung auch die noch vorhandene Restporosität im Materialgefüge der Verbundscheibe 15 aufgefüllt, wodurch das Nassansprechverhalten der Keramikbremsscheibe sowie die Verbundfestigkeit zwischen den Reibschichten 9 und dem Tragkörper 7 gegebenenfalls positiv beeinflusst wird.

Nach der Abkühlung der nachsilizierten Verbundscheibe 15 erfolgt ein zweiter Schleifschritt mit einem Materialabtrag Δx₂, bei dem sowohl die sich bei der Nachsilizierung gebildete Siliziumschicht 17 abgetragen wird als auch die Reibscheiben 9 der Verbundscheibe 15 auf ein Endmaß geschliffen werden.

## Patentansprüche

1. Verfahren zur Herstellung einer Keramikbremsscheibe für eine Scheibenbremse eines Kraftfahrzeugs, mit einem Formgebungsschritt, bei dem ein Ausgangsmaterial einer faserverstärkten Verbundkeramik zu einem Vorformling vorgeformt wird, mit einem Karbonisierungsschritt, bei dem der Vorformling unter Wärmebeaufschlagung karbonisiert wird, mit einem Verbundschritt, bei dem der karbonisierte Vorformling als ein Tragkörper (7) mit Reibscheiben (9) aus einem Keramikausgangsmaterial zu einer Verbundscheibe (15) verbunden werden, mit einem Silizierschritt, bei dem die Porenstruktur der Verbundscheibe (15) unter hoher Prozesstemperatur mit einer Siliziumschmelze infiltriert wird, wobei aufgrund der hohen Wärmebeanspruchung im Silizierschritt, insbesondere während der Abkühlung, eine Rissstruktur (11) in den Reibscheiben (9) gebildet wird, und wobei sich nach dem Silizierschritt eine Siliziumschicht (17) auf der Reibfläche (1) der Reibscheiben (9) bildet, und mit einem ersten Schleifschritt, bei dem die Reibflächen (1) der Reibscheiben (9) geschliffen werden, **dadurch gekennzeichnet, dass** im ersten Schleifschritt ein erster Materialabtrag (Δx₁) erfolgt, bei dem die Siliziumschicht (17) von den Reibscheiben (9) entfernt wird, und zwar unter Freilegung der Rissstruktur (11) sowie ohne die Bremsscheibe auf ein Endmaß zu schleifen, und dass nach dem Schleifschritt ein Nachbearbeitungsschritt folgt, bei dem eine in der Reibfläche (1) der Reibscheiben (9) freigelegte offene Rissstruktur (11) mit einem Füllmaterial (13) verschlossen wird und dass das Füllmaterial (13) Silizium oder eine Legierung daraus ist, und dass im Nachbearbeitungsschritt eine Nachsilizierung erfolgt, bei der unter hoher Wärmebeaufschlagung eine Siliziumschmelze in die offene Rissstruktur (11) infiltriert wird, und dass der Nachsilizierung ein zweiter Schleifschritt nachgelagert ist, bei dem ein zweiter Materialabtrag (Δx₂) auf ein Endmaß der Bremsscheibe erfolgt.

2. Verfahren nach Anspruch 1, **dadurch gekennzeichnet, dass** die Prozessparameter im Silizierschritt identisch mit den Prozessparametern in der Nachsilizierung sind.

3. Verfahren nach einem der vorhergehenden Ansprüche, **dadurch gekennzeichnet, dass** die Rissstruktur (11) in den Reibscheiben (9) beim Abkühlvorgang der Verbundscheibe (15) nach erfolgtem Silizierschritt entsteht, und zwar aufgrund unterschiedlicher Ausdehnungskoeffizienten in den Reibscheiben (9) und in dem Tragkörper (11).

## Claims

1. Method for producing a ceramic brake disc for a disc brake of a motor vehicle, having a shaping step in which a starting material of a fibre-reinforced composite ceramic is preformed to make a preform, having a carbonisation step in which the preform is carbonised during exposure to heat, having an interconnection step in which the carbonised preform as a support body (7) with friction discs (9) made of a ceramic starting material are interconnected to form a composite disc (15), having a siliconisation step, in which the pore structure of the composite disc (15) is infiltrated with a silicon melt under high processing temperature, wherein by reason of the high heat exposure in the siliconisation step, in particular during the cooling-off, a fissure structure (11) is formed in the friction discs (9), and wherein after the siliconisation step a silicon layer (17) forms on the friction surface (1) of the friction discs (9), and having a first grinding step, in which the friction surfaces (1) of the friction discs (9) are ground, **characterised in that** in the first grinding step is carried out a first material removal (Δx₁) in which the silicon layer (17) is removed from the friction discs (9), exposing the fissure structure (11) and without grinding the brake disc to a final dimension, and that after the grinding step follows a reworking step, in which an open fissure structure (11) exposed in the friction surface (1) of the friction discs (9) is closed with a filling material (13) and that the filling material (13) is silicon or an alloy thereof, and that in the reworking step a resiliconisation takes place, in which during high exposure to heat a silicon melt is infiltrated into the open fissure structure (11), and that downstream from the resiliconisation follows a second grinding step, in which a second material removal (Δx₂) is carried out to a final dimension of the brake disc.

2. Method according to claim 1, **characterised in that** the process parameters in the siliconisation step are identical to the process parameters in the resiliconisation.

3. Method according to any of the preceding claims, **characterised in that** the fissure structure (11) in the friction discs (9) results during the cooling procedure of the composite disc (15) after the completed siliconisation step for reasons of different expansion coefficients in the friction discs (9) and in the support body (11).

## Revendications

1. Procédé de fabrication d'un disque de frein en céramique pour un frein à disque d'un véhicule automobile avec une étape de formage, pour laquelle un matériau de sortie d'une céramique composite renforcée par des fibres est préformé en une préforme, avec une étape de carbonisation, dans laquelle la préforme est carbonisée par sollicitation thermique, avec une étape d'assemblage, dans laquelle la préforme carbonisée est raccordée en tant que corps porteur (7) avec des disques de friction (9) d'un matériau de sortie de céramique en un disque composite (15), avec une étape de silicification dans laquelle la structure poreuse du disque composite (15) est infiltrée avec une fonte de silicium sous une température de processus élevée, dans lequel en raison de la sollicitation thermique élevée dans l'étape de silicification, en particulier pendant le refroidissement, une structure de fissure (11) est formée dans les disques de friction (9), et dans lequel après l'étape de silicification une couche de silicium (17) se forme sur la surface de friction (1) des disques de friction (9), et avec une première étape de meulage, dans laquelle les surfaces de friction (1) des disques de friction (9) sont meulées, **caractérisé en ce que** dans la première étape de meulage un premier enlèvement de matériau (Δx1) est effectué, dans laquelle la couche de silicium (17) est retirée des disques de friction (9), et ce en libérant la structure de fissure (11) ainsi que sans meuler le disque de frein à une mesure finale, et qu'après l'étape de meulage une étape de réusinage suit, dans laquelle une structure de fissure (11) ouverte libérée dans la surface de friction (1) des disques de friction (9) est fermée avec un matériau de remplissage (13) et que le matériau de remplissage (13) est du silicium ou un alliage de celui-ci, et que dans l'étape de réusinage une silicification ultérieure est effectuée, dans laquelle par sollicitation thermique élevée une fonte de silicium est infiltrée dans la structure de fissure ouverte (11), et qu'après la silicification ultérieure une seconde étape de meulage est réalisée, dans laquelle un second enlèvement de matériau (Δx2) est effectué à une mesure finale du disque de frein.

2. Procédé selon la revendication 1, **caractérisé en ce que** les paramètres de processus dans l'étape de silicification sont identiques aux paramètres de processus dans la silicification ultérieure.

3. Procédé selon l'une quelconque des revendications précédentes, **caractérisé en ce que** la structure de fissure (11) apparaît dans les disques de friction (9) lors du processus de refroidissement du disque composite (15) après que l'étape de silicification a été effectuée, et ce en raison de différents coefficients d'expansion dans les disques de friction (9) et dans le corps porteur (11).
